# EUROPÄISCHE PATENTANMELDUNG

(11) **EP 2 698 285 A1**
(43) Veröffentlichungstag der Anmeldung: **19.02.2014**
(21) Anmeldenummer: 13180443.7
(22) Anmeldetag: 14.08.2013
(51) Int. Cl.: B60R 11/02, F16M 11/02, F16M 11/04

(54) **Befestigungsvorrichtung zur Befestigung eines elektronischen Geräts in einem Fahrzeug**

(30) Priorität: 16.08.2012 DE 102012107516
(71) Anmelder: Wachendorff Elektronik GmbH & Co. KG, 65366 Geisenheim (DE)
(72) Erfinder: Ziesen, Dirk, 65391 Lorch (DE); Wachendorff, Peter, 65391 Lorch (DE)
(74) Vertreter: Katscher Habermann Patentanwälte

(57) **Zusammenfassung**

Eine Befestigungsvorrichtung (1) zur Befestigung eines elektronischen Geräts in einem Fahrzeug weist eine Aufnahmeeinrichtung (8) zur Aufnahme des elektronischen Geräts und einen Haltearm (2) auf, wobei die Aufnahmeeinrichtung (8) an einem ersten Ende (4) des Haltearms (2) schwenkbar an dem Haltearm (2) gelagert ist und wobei der Haltearm (2) an einem zweiten Ende (6) mit dem Fahrzeug verbindbar ist, wobei der Haltearm (2) einen über einen Längsschlitz (3) von außen zugänglichen Innenraum (17) aufweist und sich der Innenraum (17) und der Längsschlitz (3) über mehr als die Hälfte einer Länge des Haltearms (2), vorzugsweise im Wesentlichen über die gesamte Länge des Haltearms (2) erstrecken. Der Haltearm (2) weist an seinem ersten Ende (4) eine kugelkalottenförmige Ausformung (5) auf, an der ein daran gepasster kugelkalottenförmiger Wandabschnitt (9) der Aufnahmeeinrichtung (8) klemmend festlegbar ist. Der Haltearm (2) weist im Bereich des ersten Endes (4) einen Gewindeabschnitt (16) auf, so dass die Aufnahmeeinrichtung (8) mit Hilfe eines kugelkalottenförmigen Klemmteils (13) mit einem daran angepassten Gewindeabschnitt (14) klemmend an der kugelkalottenförmigen Ausformung (5) des Haltearms (2) festlegbar ist.

## Beschreibung

Die Erfindung betrifft eine Befestigungsvorrichtung zur Befestigung eines elektronischen Geräts in einem Fahrzeug mit einer Aufnahmeeinrichtung zur Aufnahme des elektronischen Geräts und mit einem Haltearm, wobei die Aufnahmeeinrichtung an einem ersten Ende des Haltearms schwenkbar zu dem Haltearm gelagert ist und wobei der Haltearm an einem zweiten Ende mit dem Fahrzeug verbindbar ist.

In einem Fahrzeug werden üblicherweise mehrere Anzeigegeräte oder Bediengeräte in einem Sichtbereich, bzw. Betätigungsbereich eines Fahrzeugführers angeordnet. Bei den Anzeige- und Bediengeräten kann es sich um analoge und mechanische Anzeigegeräte handeln. Moderne Bediengeräte beinhalten oftmals zusätzlich zu einer Anzeigeeinrichtung mehrere Bedienelemente, mit denen einzelne Funktionen und Eigenschaften des Fahrzeugs oder einer damit verbundenen Komponente gesteuert, betätigt und überwacht werden kann. Die Anzeige- und Bediengeräte sollen dabei möglichst gut im Sichtfeld des Fahrzeugführers angeordnet und gegebenenfalls leicht zu betätigen sein, andererseits jedoch die Sicht des Fahrzeugführers auf die Umgebung möglichst wenig beeinflussen oder beschränken.

Es ist aus der Praxis bekannt, ein elektronisches Gerät mit einer Befestigungsvorrichtung auf oder an einem Armaturenbrett oder an einem Innenverkleidungsteil eines Fahrzeugs zu befestigen. Eine individuelle Anpassung des Armaturenbretts oder des Innenverkleidungsteils ist in diesem Fall nicht notwendig. Ein Austausch des elektronischen Geräts kann in einfacher Weise und kostengünstig durchgeführt werden. Der Hersteller des Fahrzeugs kann kostengünstig auf elektronische Geräte eines Drittanbieters zurückgreifen und unabhängig von der Formgebung und Ausgestaltung des Fahrzeuginnenraums das elektronische Gerät mit einer geeigneten Befestigungsvorrichtung in dem Fahrzeug befestigen.

Üblicherweise weisen derartige Befestigungsvorrichtungen eine Aufnahmeeinrichtung zur Aufnahme des elektronischen Geräts und einen Haltearm auf, über den die Aufnahmeeinrichtung an einem Fahrzeugteil in dem Fahrzeug befestigt werden kann. Eine derartige Befestigungsvorrichtung kann nachträglich beispielsweise in einer Bohrung oder an einer daran angepassten Ausformung befestigt werden. Während Saugnapfhalterungen eher für mobile elektronische Geräte mit einem geringen Eigengewicht und einem kurzen Haltearm der Befestigungsvorrichtung geeignet sind, können an einem in dem Fahrzeug verschraubten Haltearm auch größere Anzeige- oder Bediengeräte in dem Fahrzeug befestigt werden.

Allerdings wird es bei derartigen Befestigungsvorrichtungen als störend empfunden, dass die Verbindungskabel, mit denen das elektronische Gerät mit anderen Fahrzeugkomponenten verbunden ist, oftmals lose neben der Befestigungsvorrichtung verlaufen. Die freiliegende Anordnung der Verbindungskabel stellt eine ästhetische Beeinträchtigung des Fahrzeuginnenraums dar. Insbesondere bei einem langen Haltearm können sich die freiliegenden Verbindungskabel eine Beeinträchtigung des Fahrzeugführers und ein Gefahrenrisiko während der Benutzung des Fahrzeugs nicht ausgeschlossen werden. Eine verdeckte oder gefahrenfreie Führung der Verbindungskabel erfordert üblicherweise einen erheblichen konstruktiven Aufwand und setzt eine Anpassung des Armaturenbretts oder des Fahrzeugteils voraus, an dem das elektronische Gerät festgelegt werden soll.

Oftmals werden bei Fahrzeugen vorgefertigte Kabelbäume mit angeschlagenen Steckern verwendet und von dem Fahrzeughersteller eingebaut, so dass das elektronische Gerät während oder nach dessen Anordnung in dem Fahrzeug mit den bereits mit Steckern versehenen Enden der für das elektronische Gerät vorgesehenen Kabel verbunden werden muss. Eine Verlegung dieser an ihrem Ende mit Steckern versehenen Abschnitte der Verbindungskabel für das elektronische Gerät durch enge Rohre oder Kabelführungen ist oftmals schwierig oder kaum möglich, da die Stecker üblicherweise erheblich größer als der betreffende Kabeldurchmesser sind und nicht ohne weiteres durch die Rohre oder Kabelführungen passen.

Es wird deshalb als eine Aufgabe der vorliegenden Erfindung angesehen, eine Befestigungsvorrichtung der eingangs genannten Gattung so auszugestalten, dass ein elektronisches Gerät ohne eine größere ästhetische Beeinträchtigung und ohne ein nennenswertes Gefahrenrisiko in dem Fahrzeug befestigt werden kann.

Diese Aufgabe wird erfindungsgemäß dadurch gelöst, dass der Haltearm einen über einen Längsschlitz von außen zugänglichen Hohlraum aufweist und dass sich der Hohlraum und der Längsschlitz über mehr als die Hälfte einer Länge des Haltearms erstrecken. Durch den Längsschlitz können ein Verbindungskabel oder auch mehrere Verbindungskabel längs des Haltearms seitlich von außen in den Hohlraum in dem Inneren des Haltearms eingeführt werden. In dem die Verbindungskabel über einen großen Bereich des Haltearms hinweg in einem hohlen Innenraum des Haltearms verlaufen, sind sie von außen nicht sichtbar und beeinträchtigen weder das Sichtfeld noch das Betätigungsfeld des Fahrzeugführers oder von weiteren in dem Fahrzeug befindlichen Personen. Der Längsschlitz kann eine vergleichsweise geringe Breite aufweisen, die lediglich etwas größer als der größte Durchmesser eines Verbindungskabels zu dem elektronischen Gerät sein muss. Wenn das elektronische Gerät mit mehreren Verbindungskabeln verbunden ist, können die Verbindungskabel nacheinander durch den Längsschlitz in den Hohlraum in dem Inneren des Haltearms eingeführt und dort angeordnet, bzw. verlegt werden.

Mit ebenfalls geschlitzt ausgeführten Klemmringen, die nachträglich über den Längsschlitz in den Haltearm geschoben oder dort klemmend festgelegt werden, können die Verbindungskabel in axialer Richtung festgelegt, bzw. die Eintritts- und Austrittsbereiche für Verbindungskabel vorgegeben werden. Ein nachträgliches unbeabsichtigtes Herausfallen oder Austreten eines Verbindungskabels aus dem Hohlraum kann dadurch verhindert werden.

Vorzugsweise ist vorgesehen, dass sich der Hohlraum und der Längsschlitz im Wesentlichen über die gesamte Länge des Haltearms erstrecken. Wenn das zweite Ende des Haltearms einen durchgehenden Längsschlitz aufweist, können die Verbindungskabel durch dieselbe Bohrung in einem Armaturenbrett oder Fahrzeugteil herausgeführt werden, in der der Haltearm mit seinem zweiten Ende befestigt werden kann. Die Verbindungskabel werden dann von außen unsichtbar durch den geschlitzten Haltearm bis zu dem an dem Haltearm befestigten elektronischen Gerät geführt. Es ist nicht erforderlich, zusätzlich zu der Befestigungsbohrung in dem Armaturenbrett eine weitere Bohrung oder Öffnung vorzusehen, durch welche beabstandet zu der Befestigungsbohrung die Verbindungskabel aus dem Armaturenbrett herausgeführt werden.

Da die Verbindungskabel nicht in axialer Richtung durch den Haltearm hindurchgeführt, bzw. hindurchgezogen werden müssen und deshalb auch eventuell bereits an den Enden der Verbindungskabel befestigte Stecker nicht durch den Haltearm hindurchgeführt werden müssen, muss der Durchmesser des Haltearms ausschließlich an den Raumbedarf der Verbindungskabel angepasst werden. Eine Berücksichtigung der oftmals wesentlich voluminöseren Stecker ist für die Dimensionierung der Querschnittsfläche des Haltearms nicht erforderlich, so dass der mit einem Längsschlitz zum seitlichen Einführen der Verbindungskabel ausgestattete Haltearm wesentlich schlanker und mit einer erheblich geringeren Querschnittsfläche ausgestaltet werden kann als ein hohler Haltearm, bei dem die Verbindungskabel in axialer Richtung durch den Innenraum des Haltearms hindurchgezogen werden müssen.

In vorteilhafter Weise ist vorgesehen, dass der Haltearm an seinem zweiten Ende einen Gewindeabschnitt aufweist. Mit diesem Gewindeabschnitt kann der Haltearm in einer Bohrung festgelegt werden, die einen daran angepassten Gewindeabschnitt aufweist. Eine derartige Bohrung kann ohne größeren Aufwand nachträglich in einem Armaturenbrett oder in einem Fahrzeugteil erzeugt werden. Eine individuelle Anpassung des Armaturenbretts ist nicht erforderlich.

Wenn die Verbindungskabel ebenfalls durch diese Bohrung aus dem Armaturenbrett herausgeführt werden, ist in einfacher Weise eine rasche Montage einer optisch ansprechenden Befestigungsvorrichtung möglich, bei der die Verbindungskabel nachträglich in die Befestigungsvorrichtung integriert werden können und die Befestigungsvorrichtung in dem Fahrzeug befestigt werden kann.

Gemäß einer besonders vorteilhaften Ausgestaltung des Erfindungsgedankens ist vorgesehen, dass der Haltearm an seinem ersten Ende eine kugelkalottenförmige Ausformung aufweist, an der ein daran gepasster kugelkalottenförmiger Wandabschnitt der Aufnahmeeinrichtung klemmend festlegbar ist. Derartige Schwenkvorrichtungen, bei denen kugelkalottenförmige Wandabschnitte in Anlage gebracht und klemmend aneinander festgelegt werden, eignen sich in besonderer Weise für eine allseitig verschwenkbare Gelenkeinrichtung, die einen Schwenkbereich von bis zu 20° oder 30° ermöglichen soll. Die Ausrichtung des elektronischen Geräts kann notwendig oder zweckmäßig sein, wenn eine Anpassung an die Größe und Sitzposition des Benutzers erfolgen soll oder beispielsweise auf Grund des aktuellen Sonnenstands das elektronische Gerät verschwenkt werden soll, um zu vermeiden, dass das Sonnenlicht direkt auf eine Anzeigeeinrichtung oder Oberfläche des Geräts auftrifft und für den Benutzer störende Lichtreflexe auftreten, durch die ein Ablesen von angezeigten Informationen oder eine Bedienung des elektronischen Geräts erschwert werden. Erfahrungsgemäß ist ein Schwenkbereich von etwa 20° bis 30° oftmals ausreichend, um eine in den meisten Situationen als angenehm empfundene Ausrichtung des elektronischen Geräts relativ zu einem Benutzer vornehmen und anpassen zu können.

Durch die aneinander anliegenden kugelkalottenförmigen Wandabschnitte kann eine große Kontaktfläche und damit eine große mechanische Stabilität der in einem vorgegebenen Winkel an dem Haltearm arretierten Aufnahmeeinrichtung gewährleistet werden. Ein Verstellung und Neueinstellen des elektronischen Geräts in einer veränderten Ausrichtung ist in einfacher Weise mit wenigen Handgriffen möglich.

Vorzugsweise ist vorgesehen, dass der Haltearm im Bereich des ersten Endes einen Gewindeabschnitt aufweist und die Aufnahmeeinrichtung mit einem kugelkalottenförmigen Klemmteil mit einem daran angepassten Gewindeabschnitt an der kugelkalottenförmigen Ausformung des Haltearms festlegbar ist. Mit Hilfe eines kugelkalottenförmigen Klemmteils, das durch Schraubbewegungen zu der daran angepassten kugelkalottenförmigen Ausformung des Haltearms hin oder von dieser weg verlagert werden kann, kann in einfacher Weise der dazwischen angeordnete kugelkalottenförmige Wandabschnitt der Aufnahmeeinrichtung klemmend eingespannt oder aber freigegeben werden. Dabei kann mit einem Handgriff und einer kurzen Drehbewegung das Klemmteil geringfügig verlagert werden, so dass die Aufnahmeeinrichtung gegen eine verbleibende Klemmkraft verlagert und neu ausgerichtet werden kann, ohne dass die klemmende Verbindung vollständig gelöst und die Aufnahmeeinrichtung ungehindert in eine Endposition verkippen könnte.

Um die Handhabung der Befestigungsvorrichtung und insbesondere ein Verstellung und Arretieren der Aufnahmeeinrichtung relativ zu Haltearm zu erleichtern, ist vorgesehen, dass zwischen der kugelkalottenförmigen Ausformung des Haltearms und dem kugelkalottenförmigen Wandabschnitt ein elastischer Klemmkörper angeordnet ist. Der elastische Klemmkörper kann aus mehreren Formteilen aus einem elastischen Material, wie beispielsweise Gummi bestehen. Der elastische Klemmkörper bzw. die mehreren Formteile können in daran angepassten Ausnehmungen in der kugelkalottenförmigen Ausformung des Haltearms oder in dem kugelkalottenförmigen Wandabschnitt angeordnet und beispielsweise klebend festgelegt sein.

Es ist ebenfalls möglich, dass der elastische Klemmkörper ein geschlitzter Dichtungsring ist. Der Dichtungsring kann in einer umlaufenden Nut in der kugelkalottenförmigen Ausformung des Haltearms oder in dem kugelkalottenförmigen Wandabschnitt der Aufnahmeeinrichtung angeordnet und festgelegt sein.

Es ist natürlich ebenso denkbar, dass der elastische Klemmkörper zwischen dem kugelkalottenförmigen Wandabschnitt der Aufnahmeeinrichtung und einem gegebenenfalls ebenfalls kugelkalottenförmigen Klemmteil angeordnet ist.

Durch die Verwendung eines elastischen Klemmkörpers kann die Klemmwirkung positiv beeinflusst werden. Zusätzlich zu der Klemmwirkung kann über den elastischen Klemmkörper eine Haftreibung auf die schwenkbar gelagerte Aufnahmeeinrichtung ausgeübt werden, die ein Lösen und erneutes Ausrichten der Aufnahmeeinrichtung relativ zu dem Haltearm erleichtert.

Gemäß einer vorteilhaften Ausgestaltung des Erfindungsgedankens ist vorgesehen, dass die Aufnahmeeinrichtung eine Durchführung für Verbindungskabel aufweist. Auf diese Weise ist es möglich, die für das elektronische Gerät erforderlichen Verbindungskabel nicht nur im Bereich des Haltearms in einem Innenraum des Haltearms zu verlegen, sondern von dem Innenraum des Haltearms aus durch die Durchführung in der Aufnahmeeinrichtung direkt zu dem elektronischen Gerät zu führen. Die Verbindungskabel können auch dadurch von außen völlig unsichtbar und geschützt durch den Haltearm und die Aufnahmeeinrichtung bis zu dem elektronischen Gerät geführt, bzw. verlegt und dort mit dem elektronischen Gerät verbunden werden.

Um eine nachträgliche Montage der Befestigungsvorrichtung zu erleichtern ist vorgesehen, dass die Aufnahmeeinrichtung einen Längsschlitz aufweist. Durch diesen Längsschlitz hindurch können die Verbindungskabel von außen seitlich in die Aufnahmeeinrichtung eingeführt werden. Die Verbindungskabel können im Hinblick auf eine möglichst einfache Montage entweder vorher oder anschließend mit dem elektronischen Gerät verbunden werden. Der Längsschlitz erstreckt sich dabei zweckmäßigerweise bis zu der in der Aufnahmeeinrichtung ausgebildeten Durchführung für die Verbindungskabel. Die Aufnahmeeinrichtung kann mit ihrem Längsschlitz fluchtend zu dem Längsschlitz in dem Haltearm angeordnet und bereits mit dem Haltearm verbunden werden, bevor nachträglich die Verbindungskabel durch den Längsschlitz in das Innere des Haltearms, bzw. in die Durchführung in der Aufnahmeeinrichtung eingeführt werden und die Befestigungsvorrichtung mit dem zweiten Ende des Haltearms mit dem Fahrzeug verbunden wird oder das elektronische Gerät auf der Aufnahmevorrichtung befestigt wird.

Wenn die Aufnahmeeinrichtung vor der Befestigung und Ausrichtung des elektronischen Geräts verdreht wird, so dass der Längsschlitz in der Aufnahmeeinrichtung nicht mehr fluchtend mit dem Längsschlitz in dem Haltearm ausgerichtet ist, wird durch bereits verhindert, dass ein im Inneren verlaufendes Verbindungskabel in diesem Bereich aus dem Innenraum herausfallen oder heraushängen kann.

Um auch in dem Übergangsbereich von der Aufnahmeeinrichtung zu einem damit verbundenen elektronischen Gerät die Verbindungskabel von dem Umgebung abzuschirmen und mit einer Blende oder Abdeckung optisch ansprechend zu gestalten ist vorgesehen, dass die Aufnahmeeinrichtung eine Halteeinrichtung für das elektronische Gerät und eine Abdeckung für Verbindungskabel aufweist. Die Halteeinrichtung kann beispielsweise ein L-förmiges oder C-förmiges Halteelement aufweisen, in dem eine Anzeigeeinrichtung oder ein platten- oder tablettförmiges Bediengerät aufgenommen und festgelegt werden kann. Das Halteelement umgibt dabei zweckmäßigerweise auch denjenigen Bereich des elektronischen Geräts, in dem die Verbindungskabel mittels Steckverbindern mit dem elektronischen Gerät verbunden werden können. Durch eine Blende oder lösbare Abdeckung kann dieser Bereich abgedeckt werden, so dass die Verbindungskabel einschließlich der Steckverbindungen von außen nicht sichtbar und nicht zugänglich sind.

Nachfolgend werden Ausführungsbeispiele des Erfindungsgedankens näher erläutert, die in der Zeichnung dargestellt sind.

Es zeigt:
Fig. 1 eine perspektivische Ansicht einer Befestigungsvorrichtung mit einem Haltearm und ein mit einer schwenkbar mit dem Haltearm verbundenen Aufnahmeeinrichtung,
Fig. 2 eine Schnittansicht der in Fig. 1 abgebildeten Befestigungsvorrichtung,
Fig. 3 eine Schnittansicht einer anders ausgestalteten Befestigungsvorrichtung,
Fig. 4 eine Schnittansicht durch eine Aufnahmeeinrichtung, in der ein elektronisches Bediengerät festgelegt und mit Verbindungskabeln verbunden ist, und
Fig. 5 eine Schnittansicht gemäß Fig. 4, wobei die Aufnahmeeinrichtung und der schwenkbar damit verbundene Haltearm anders ausgestaltet sind.

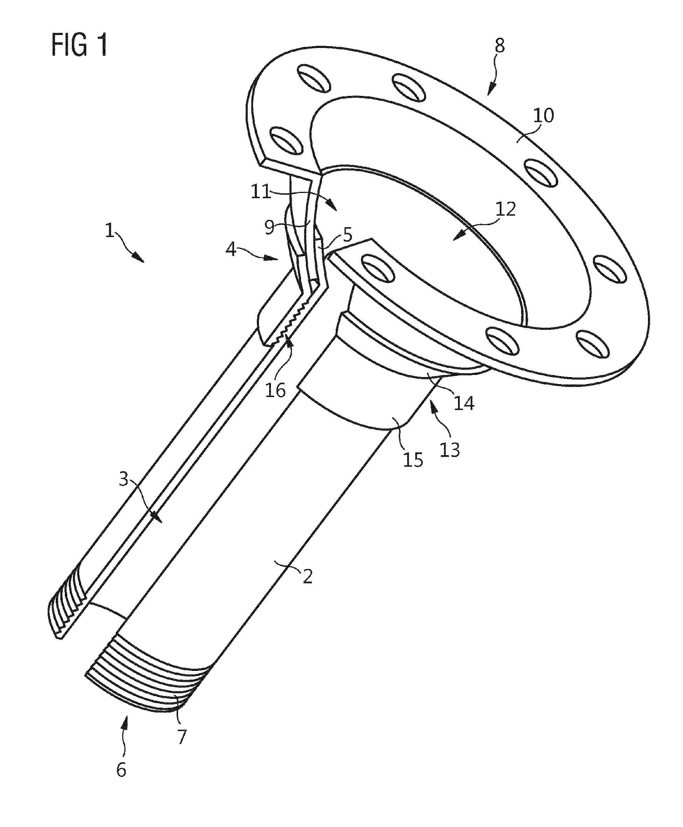

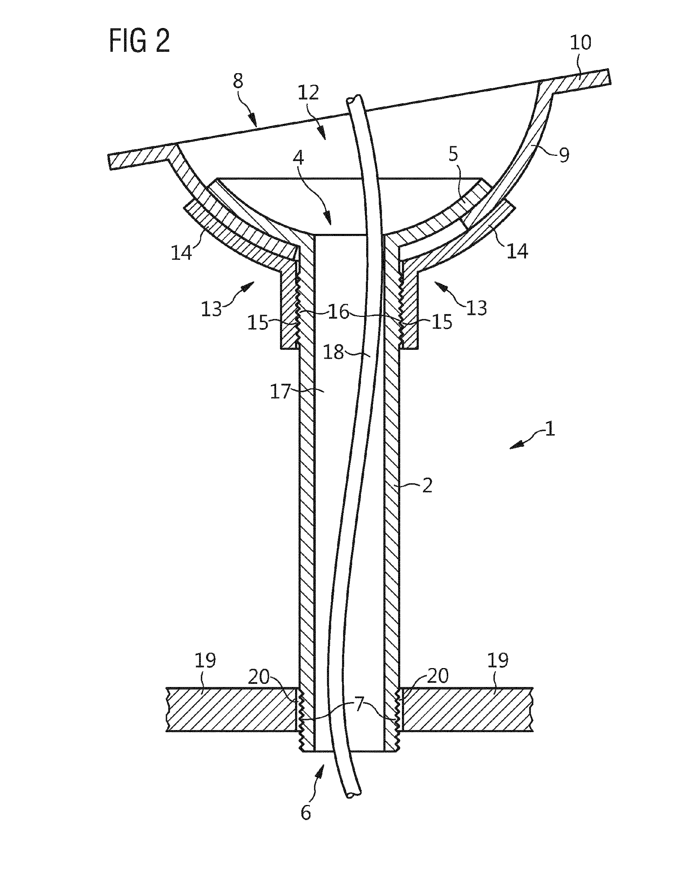

Eine in den Fig. 1 und 2 exemplarisch dargestellte Befestigungsvorrichtung 1 weist einen hohlzylinderförmigen Haltearm 2 mit einem sich über die gesamte Länge des Haltearms erstreckende Längsschlitz 3 auf. An einem ersten Ende 4 weist der Haltearm 2 eine kugelkalottenförmige Ausformung 5 auf. An einem zweiten Ende 6 weist der Haltearm 2 einen Gewindeabschnitt 7 auf, mit dem der Haltearm 2 in einer Bohrung oder in einer darin angepassten Aufnahme beispielsweise in einem Armaturenbrett oder in einem Fahrzeugteil festgelegt werden kann.

Im Bereich des ersten Endes 4 des Haltearms 2 ist eine Aufnahmeeinrichtung 8 angeordnet. Die Aufnahmeeinrichtung 8 weist einen ebenfalls kugelkalottenförmigen Wandabschnitt 9 auf, der an die Formgebung der kugelkalottenförmigen Ausformung 5 des Haltearms 2 angepasst ist. An einem den Haltearm 2 abgewandten Ende weist die Aufnahmeeinrichtung 8 einen radial nach außen vorspringenden Befestigungsflansch 10 auf. An dem Befestigungsflansch 10 kann ein elektronisches Gerät befestigt werden.

Die Aufnahmeeinrichtung 8 weist ebenso wie der Haltearm 2 einen seitlich angeordneten und axial verlaufenden Längsschlitz 11 auf. Der Wandabschnitt 9 und der Befestigungsflansch 10 umgeben einen Innenraum 12 in der Aufnahmeeinrichtung 8, der als Durchführung für Verbindungskabel genutzt werden kann.

Der kugelkalottenförmigen Wandabschnitt 9 der Aufnahmeeinrichtung 8 wird mit Hilfe eines Klemmteils 13 an die daran angepasste und ebenfalls kugelkalottenförmige Ausformung 5 des Haltearms 2 angedrückt. Das Klemmteil 13 weist zu diesem Zweck einen ebenfalls kugelkalottenförmigen Klemmabschnitt 14 und einen hohlzylindrischen Gewindeabschnitt 15 auf. Das Klemmteil 13 kann im Bereich des Gewindeabschnitts 15 mit einem daran angepassten Gewindeabschnitt 16 an dem Haltearm 2 in Eingriff treten und formschlüssig im Bereich des ersten Endes 4 an dem Haltearm 2 festgelegt werden. Mit dem Klemmabschnitt 14 drückt das Klemmteil 13 den kugelkalottenförmigen Wandabschnitt 9 an die kugelkalottenförmigen Ausformung 5 des Haltearms 2 und legt die Aufnahmeeinrichtung 8 in der von einem Benutzer vorgegebenen Ausrichtung klemmend an der kugelkalottenförmigen Ausformung 5 des Haltearms 2 fest. Zum Verstellen der Ausrichtung der Aufnahmeeinrichtung 8 muss lediglich das Klemmteil 13 mit einer Schraubbewegung von der kugelkalottenförmigen Ausformung 5 entfernt werden, so dass der dazwischen befindliche Wandabschnitt 9 der Aufnahmeeinrichtung 8 lose zwischen der kugelkalottenförmigen Ausformung 5 des Haltearms 2 und dem Klemmabschnitt 14 des Klemmteils 13 aufgenommen ist und einfach verlagert werden kann. Zum Arretieren der Aufnahmeeinrichtung 8 in einer gewünschten Ausrichtung muss das Klemmteil 13 mit einer Schraubbewegung bzw. mit einem einzigen Handgriff in Richtung der kugelkalottenförmigen Ausformung 5 verlagert werden, um den Wandabschnitt 9 wieder klemmend festzulegen.

In einem in Fig. 2 besonders anschaulich dargestellten Innenraum 17 des Haltearms 2 verläuft ein Verbindungskabel 18, das an dem zweiten Ende 6 in den Haltearm 2 eintritt und den Haltearm 2 an dem ersten Ende 4 durch den Innenraum 12 der Aufnahmeeinrichtung 8 verlässt. Das Verbindungskabel kann durch die seitlich angeordneten Längsschlitze 3 und 11 seitlich in den Haltearm 2, bzw. in die Aufnahmeeinrichtung 8 eingeführt werden. Um die Befestigungsvorrichtung 1 an einem Armaturenbrett 19 zu befestigen, muss lediglich das Verbindungskabel 18 in die Befestigungsvorrichtung 1 eingeführt und anschließend der Haltearm 2 mit seinem Gewindeabschnitt 7 an seinem zweiten Ende 6 in einen daran angepassten Gewindeabschnitt 20 in dem Armaturenbrett 19 eingedreht und verschraubt werden.

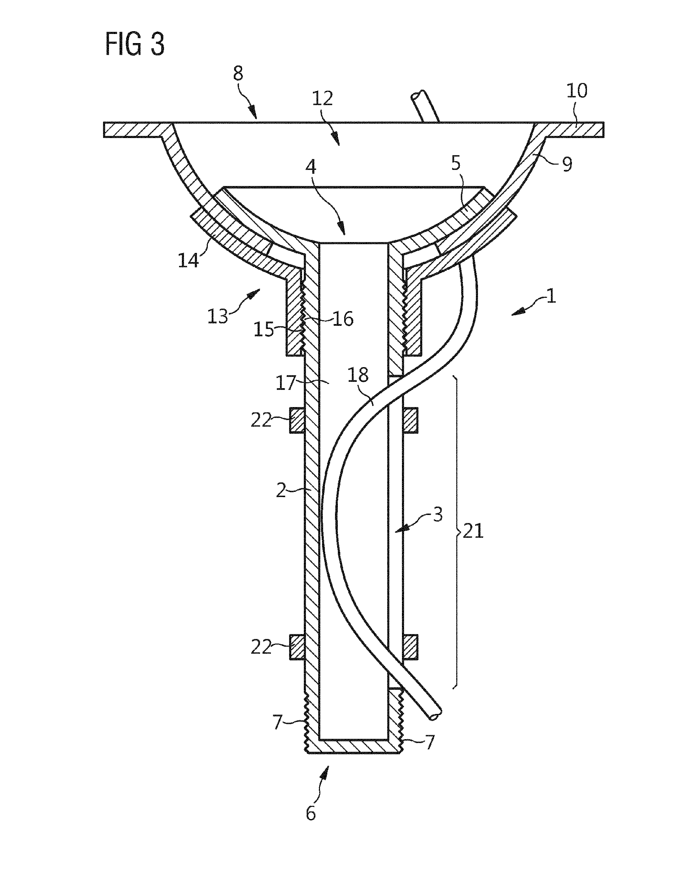

Bei dem in Fig. 3 exemplarisch dargestellten Ausführungsbeispiel erstreckt sich der Längsschlitz 3 des Haltearms 2 nicht über die gesamte Länge des Haltearms 2, sondern lediglich über einen mittleren Abschnitt 21 des Haltearms 2. Das Verbindungskabel 18 kann bei dieser Ausgestaltung des Haltearms 2 seitlich in den Innenraum 17 eingeführt und unterhalb des Klemmteils 13 wieder aus dem Innenraum 17 des Haltearms 2 herausgeführt werden. In diesem mittleren Abschnitt 21 verläuft das Verbindungskabel 18 vor unerwünschten Blicken und Zugriffen eines Benutzers geschützt in dem Innenraum 17 des Haltearms 2. Durch Klemmringe 22, die nachträglich von außen auf den Haltearm 2 aufgesteckt und in axialer Richtung verschoben werden können, wird das Verbindungskabel 18 im Bereich eines Eintritts und eines Austritts aus dem Innenraum 17 festgelegt und dadurch verhindert, dass das Verbindungskabel 18 aus dem Innenraum 17 des Haltearms 2 herausfällt oder herausgezogen werden kann.

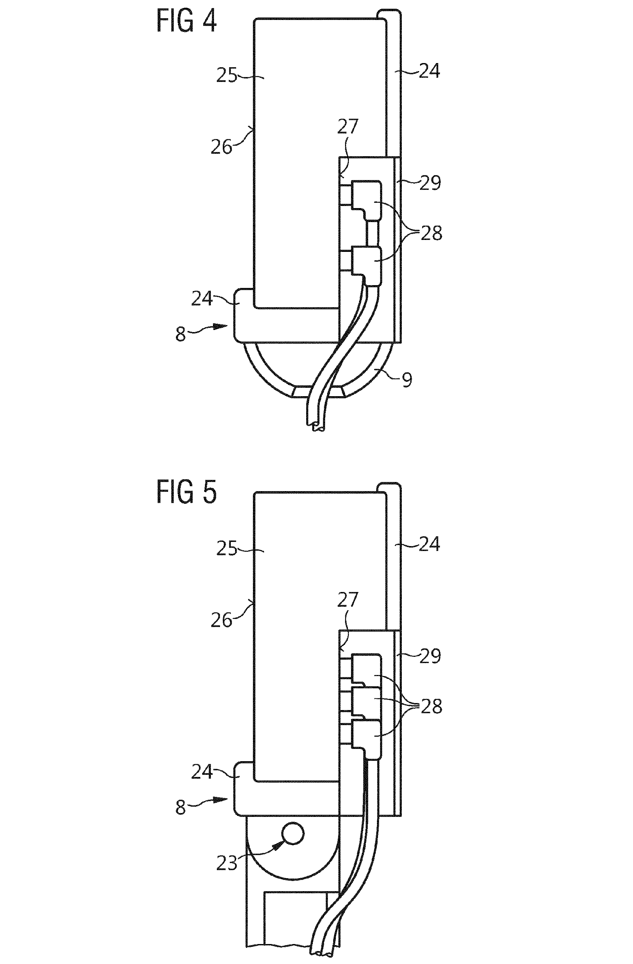

In den Fig. 4 und 5 sind exemplarisch zwei verschiedene Ausgestaltungen der Aufnahmeeinrichtung 8 dargestellt. Während die in Fig. 4 dargestellte Aufnahmeeinrichtung 8 den auch in den vorangegangenen Ausführungsbeispielen beschriebenen kugelkalottenförmigen Wandabschnitt 9 aufweist, ist bei dem in Fig. 5 dargestellten Ausführungsbeispiel stattdessen eine um eine horizontale Achse schwenkbare Schwenkeinrichtung 23 vorgesehen. In beiden Fällen weist die Aufnahmeeinrichtung 8 ein näherungsweise L-förmiges Halteelement 24 auf, in dem ein quaderförmiges Bediengerät 25 aufgenommen ist. Das Bediengerät 25 weist auf einer einem Betrachter zugewandten Vorderseite 26 eine Anzeigeeinrichtung auf. An einer Rückseite 27 können mehrere Verbindungskabel 18 mit Hilfe von geeigneten Steckverbindern 28 mit dem Bediengerät 25 verbunden werden. Eine flächenbündig abschließende Abdeckung 29 bedeckt die mit dem Bediengerät 25 verbundene Steckverbindung 28 und schützt diesen Bereich vor den Blicken und dem Zugriff eines Benutzers.

## Patentansprüche

1. Befestigungsvorrichtung (1) zur Befestigung eines elektronischen Geräts (25) in einem Fahrzeug mit einer Aufnahmeeinrichtung (8) zur Aufnahme des elektronischen Geräts (25) und mit einem Haltearm (2), wobei die Aufnahmeeinrichtung (8) an einem ersten Ende (4) des Haltearms (2) schwenkbar an dem Haltearm (2) gelagert ist und wobei der Haltearm (2) an einem zweiten Ende (6) mit dem Fahrzeug verbindbar ist, **dadurch gekennzeichnet, dass** der Haltearm (2) einen über einen Längsschlitz (3) von außen zugänglichen Innenraum (17) aufweist, und dass sich der Innenraum (17) und der Längsschlitz (3) über mehr als die Hälfte einer Länge des Haltearms (2) erstrecken.

2. Befestigungsvorrichtung (1) nach Anspruch 1, **dadurch gekennzeichnet, dass** sich der Innenraum (17) und der Längsschlitz (3) im Wesentlichen über die gesamte Länge des Haltearms (2) erstrecken.

3. Befestigungsvorrichtung (1) nach Anspruch 1 oder Anspruch 2, **dadurch gekennzeichnet, dass** der Haltearm (2) an seinem zweiten Ende (6) einen Gewindeabschnitt (7) aufweist.

4. Befestigungsvorrichtung (1) nach einem der vorangehenden Ansprüche, **dadurch gekennzeichnet, dass** der Haltearm (2) an seinem ersten Ende (4) eine kugelkalottenförmige Ausformung (5) aufweist, an der ein daran gepasster kugelkalottenförmiger Wandabschnitt (9) der Aufnahmeeinrichtung (8) klemmend festlegbar ist.

5. Befestigungsvorrichtung (1) nach Anspruch 4, **dadurch gekennzeichnet, dass** der Haltearm (2) im Bereich des ersten Endes (4) einen Gewindeabschnitt (16) aufweist und dass die Aufnahmeeinrichtung (8) mit Hilfe eines kugelkalottenförmigen Klemmteils (13) mit einem daran angepassten Gewindeabschnitt (14) klemmend an der kugelkalottenförmigen Ausformung (5) des Haltearms (2) festlegbar ist.

6. Befestigungsvorrichtung (1) nach einem der Ansprüche 4 oder 5, **dadurch gekennzeichnet, dass** zwischen der kugelkalottenförmigen Ausformung (5) des Haltearms (2) und dem kugelkalottenförmigen Wandabschnitt (9) der Aufnahmeeinrichtung (8) ein elastischer Klemmkörper angeordnet ist.

7. Befestigungsvorrichtung (1) nach Anspruch 6, **dadurch gekennzeichnet, dass** der elastische Klemmkörper ein geschlitzter Dichtungsring ist.

8. Befestigungsvorrichtung (1) nach einem der vorangehenden Ansprüche, **dadurch gekennzeichnet, dass** die Aufnahmeeinrichtung (8) eine Durchführung für Verbindungskabel (18) aufweist.

9. Befestigungsvorrichtung (1) nach Anspruch 8, **dadurch gekennzeichnet, dass** die Aufnahmeeinrichtung (8) einen Längsschlitz (11) aufweist.

10. Befestigungsvorrichtung (1) einem der vorangehenden Ansprüche, **dadurch gekennzeichnet, dass** die Aufnahmeeinrichtung (8) eine Halteeinrichtung (24) für das elektronische Gerät (25) und eine Abdeckung für Verbindungskabel (18) aufweist.
